Europäisches Patentamt

European Patent Office

Office européen des brevets

(11) Veröffentlichungsnummer: **0 282 854**
A2

## EUROPÄISCHE PATENTANMELDUNG

(21) Anmeldenummer: 88103464.9

(22) Anmeldetag: 05.03.88

(51) Int. Cl.⁴: **C08F 279/02** , C08L 51/04

(30) Priorität: 19.03.87 DE 3708913

(43) Veröffentlichungstag der Anmeldung:
21.09.88 Patentblatt  88/38

(84) Benannte Vertragsstaaten:
DE ES FR GB IT NL

(71) Anmelder: BAYER AG
Konzernverwaltung RP Patentabteilung
D-5090 Leverkusen 1 Bayerwerk(DE)

(72) Erfinder: Lindner, Christian, Dr.
Riehlerstrasse 200
D-5000 Köln 60(DE)
Erfinder: Ott, Karl-Heinz, Dr.
Paul-Klee-Strasse 54
D-5090 Leverkusen 1(DE)

(54) **Verfahren zur Herstellung kautschukreicher Propfpolymerisate.**

(57) Verfahren zur Herstellung von Pfropfpolymerisaten harzbildender Momomerer auf einen Kautschuk in welchem durch Verwendung eines Initiatorsystems aus einem organischem Hydroperoxid und Ascorbinsäure eine sehr hohe Pfropfausbeute erreicht wird. Die erhaltenen Pfropfpolymerisate eignen sich als thermoplastische Formmassen oder als Bestandteile solcher Massen.

EP 0 282 854 A2

## Verfahren zur Herstellung kautschukreicher Pfropfpolymerisate

Die Erfindung betrifft ein Verfahren zur Herstellung von Pfropfpolymerisaaten harzbildender Monomerer auf einen Kautschuk in welchem durch Verwendung eines Initiatorsystems aus einem organischem Hydroperoxid und Ascorbinsäure eine sehr hohe Pfropfausbeute erreicht wird. Die erhaltenen Pfropfpolymerisate eignen sich als thermoplastische Formmassen oder als Bestandteile solcher Massen.

Pfropfpolymerisate harzbildender Monomerer auf Kautschuk sind bekannt und haben sich zur Herstellung von Formkörpern aus Chemiewerkstoffen bewährt. Bei der Herstellung solcher Pfropfpolymerisate durch radikalische Polymerisation bilden sich als Nebenprodukte freie Polymerisate der harzbildenden Monomeren. Die Verhältnisse sind durch den Pfropfgrad quantitativ beschrieben, d.h. durch das Gewichtsverhältnis der pfropfpolymerisierten Monomeren zur (Kautschuk)Pfropfgrundlage. In Pfropfpoly merisaten mit Kautschukgehalten von 40 Gew.-% ist der maximale Pfropfgrad somit 1,5; in solchen mit 90 Gew.-% Kautschuk dagegen 0,1, wenn die harzbildenden Monomeren vollständig auf den Kautschuk aufgepfropft sind. Der Pfropfgrad ist abhängig vom Kautschukgehalt und eignet sich daher besonders zum Vergleich von Pfropfpolymerisaten mit gleichem Kautschukgehalt. Meist ist der Pfropfgrad kleiner als der maximal mögliche z.B. bei Kautschukgehalten von 40 Gew.-% im Bereich von etwa 0,7, und bei Kautschukgehalten von 90 Gew.-% im Bereich von etwa 0,05, d.h. nur ein Teil des bei der Pfropfpolymerisation gebildeten Harzes wird wirklich auf den Kautschuk aufgepfropft. Zur Charakterisierung von stark gepfropften Kautschuken (oder zur Beschreibung des Ausmaßes einer Pfropfpolymerisation) eignet sich besser die Pfropfausbeute, d.h. das Gewichtsverhältnis im gepfropften Monomeren zum gesamten Harzmonomeren (der Wert wird mit 100 multipliziert und in % angegeben).

Bei vollständiger Pfropfung beträgt die Pfropfausbeute 100 %, Die üblichen Pfropfausbeuten für Pfropfpolymerisate mit Kautschukgehalten von 40 bis 90 Gew.-% sind etwa 40 bis 60 %, wobei hohe Pfropfausbeuten i.a. nur bei Pfropfpolymeren mit hohem Kautschukgehalt (über 60 %) vorkommen. Für eine Reihe von Anwendungen sind aber Pfropfpolymerisate mit möglichst hoher Pfropfausbeute (die möglichst geringe Mengen freies Polymerisat der harzbildenden Monomeren enthalten) erforderlich, da das nicht an den Kautschuk gebundene Polymerisat die physikalischen Eigenschaften (insbesondere in Mischungen mit weiteren Komponenten) beeinflußt. So verlieren die Pfropfpolymerisate bei Anwesenheit (oder Reduzierung der Menge) der freien Polymerisate ihren reinen Thermoplastcharakter und werden Elastomeren ähnlicher, bis hin zum Erscheinungsbild thermoplastisch verarbeitbarer Kautschuke.

Es wurde nun gefunden, daß man Pfropfpolymerisate harzbildender Monomerer auf Kautschuke - im folgenden auch Harz/Kautschuk-Pfropfpolymerisate genannt - mit hoher Pfropfausbeute herstellen kann (so daß sie überraschend geringe Anteile freier Polymerisate enthalten), wenn man die Pfropfpolymerisation in Emulsion unter Verwendung eines Initiatorsystems aus einem organischen Hydroperoxid und Ascorbinsäure durchführt.

Gegenstand der Erfindung ist somit ein Verfahren zur Herstellung von Pfropfpolymerisaten, aus

a) 40 bis 90, insbesondere 50 bis 80, Gew.-% eines wenigstens partiell vernetzten, teilchemförmigen Dienkautschuks eines mittleren Teilchendurchmessers von 0,1 bis 0,6 μm und

b) 60 bis 10, insbesondere 50 bis 20, Gew.-% Styrol, Acrylnitril, Methylmethacrylat oder Mischungen daraus durch Emulsionspfropfpolymerisation, das dadurch gekennzeichnet ist, daß man ein Initiatorsystem aus einem organischen Hydroperoxid und Ascorbin säure unter Erzielung einer Pfropfausbeute von größer 60 Gew.-%, insbesondere größer 70 Gew.-% vorzugsweise größer 80 Gew.-% verwendet.

In einer besonders bevorzugten Ausführungsform führt man die Pfropfpolymerisation der Monomeren b) in wäßriger Emulsion in Gegenwart einer Emulsion des Kautschukpolymerisates a) bei Temperaturen von 40 bis 70°C, insbesondere 50 bis 70°C durch, unter Einsatz eines Initiatorsystems aus organischem Hydroperoxid (I) und Ascorbinsäure (II), wobei 0,3 bis 1,5 Gew.-Teile (I) und 0,1 bis 1 Gewichtsteil (II), jeweils bezogen auf 100 Gew.-Teile Pfropfmonomere, eingesetzt werden und das Gewichtsverhältnis (I)/(II) 0,3 bis 15, insbesondere 1 bis 10, vorzugsweise 3 bis 8, ist.

Ebenfalls Gegenstand der Erfindung sind die so erhaltenen Pfropfpolymerisate.

Ein weiterer Gegenstand der Erfindung sind thermoplastische Formmassen, aus wenigstens einem erfindungsgemäßen Pfropfpolymerisat und wenigstens einem thermoplastischen Harz z.B. Styrol-Acrylnitril-Copolymer, α-Methylstyrol-Acrylnitril-Copolymer, Polyvinylchlorid (PVC) und ABS.

Pfropfpolymerisate im Sinne der Erfindung sind Polymerisate, die durch Polymerisation von harzbildenden Monomeren in Gegenwart eines Dienkautschuks erhalten werden, wobei das Polymerisat der harzbildenden Monomeren so vollständig wie möglich pfropfpolymerisiert ist.

2

Kautschuke im Sinne der Erfindung sind bevorzugt Dienkautschuke wie Homopolymerisate von Butadien, Isopren, Chloropren und Copolymerisate dieser Monomeren mit bis zu 40 Gew.-% anderen Monomeren wie Acrylnitril, Styrol, Alkylacrylat, Alkylmethacrylat sowie gegebenenfalls geringeren Mengen Polyfunktioneller Vinylmonomer wie Divinylbenzol und Diol-bis-acrylate.

Die Kautschuke sind wenigstens partiell vernetzt und besitzen Gelgehalte von 10 bis 90 Gew.-%, insbesondere von 40 bis 80 Gew.-% und sind teilchenförmig mit mittleren Teilchengrößen ($d_{50}$-Werte) von 0,1 bis 0,6 $\mu$m, insbesondere 0,1 bis 0,5 $\mu$m. Solche teilchenförmigen Kautschuke sind bekannt. Sie werden durch Emulsionspolymerisation hergestellt und liegen meist als Latices vor.

Erfindungsgemäß können die Pfropfpolymerisate in wäßriger Emulsion durch Polymerisation der Monomeren auf einen in wäßriger Emulsion vorliegenden Kautschuk hergestellt werden. Dabei werden üblicherweise oberflächenaktive Hilfsmittel eingesetzt, Emulgatoren oder Dispergatoren sowie gegebenenfalls Zusätze, um bestimmte pH-Werte und Elektrolytgehalte bei der Pfropfpolymerisation einzustellen. Unter Umständen kann man die Emulsions-Pfropfpolymerisation auch ohne Emulgatorzusatz durchführen, insbesondere dann, wenn man mit geringen Monomermengen arbeitet, bezogen auf die Kautschukmenge, oder wenn die in der Kautschukemulsion (Latex) schon selbst vorliegenden Mengen an Emulgator bereits aus reichen, um die Pfropfpolymerisation der Monomeren im Emulsionszustand bei genügender Emulsionsstabilität zu gewährleisten.

Besonders geeignet sind anionische Emulgatoren, vorzugsweise Alkali-Salze von Fettsäuren, Harzsäuren, disproportionierten Harzsäuren, Alkylsulfonsäuren, Arylsulfonsäuren. Sie werden in Mengen bis zu 5 Gew.-%, vorzugsweise bis zu 2,5 Gew.-% bezogen auf die zu polymerisierenden Monomeren, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, also Hydroperoxide mit großen Halbwertszeiten.

Thermoplastische Harze im Sinne der Erfindung sind z.B. Styrol-Acrylnitril-Copolymerisate, $\alpha$-Methylstyrol-Acrylnitril-Copolymerisate, welche gegebenenfalls anteilmäßig zusätzlich Styrol einpolymerisiert enthalten, Polyvinylchlorid und Acrylnitril-Styrol-Butadien-Polymerisate, bekannt unter der Mischung ABS-Kunsttoff.

Das erfindungsgemäße Verfahren kann beispielsweise wie folgt durchgeführt werden:

Eine wäßrige Emulsion eines partiell vernetzten Dienkautschuks wird diskontinuierlich oder kontinuierlich in wäßriger Emulsion bepfropft; bei Polymerisationstemperaturen von 40 bis 70°C, insbesondere 50 bis 70°C, wird die Kautschukemulsion mit den Pfropfmonomeren sowie gegebenenfalls zusätzlichem Emulgator und Hydroperoxid sowie Ascorbinsäurelösungen versetzt. Dabei sind die Mengenverhältnisse, wie oben beschrieben, einzuhalten. In Ausnahmefällen können in die Polymerisation als weitere Komponente des Startersystems katalytisch geringe Menge Schwermetallkationen, insbesondere Fe, zugefügt werden, insbesondere dann, wenn Dienkautschukemulsionen verwendet werden müssen, die selbst schon größere Mengen Komplexierungsagenzien enthalten. Normalerweise wird in dem erfindungsgemäßen Verfahren ohne Zusatz von Eisenionen gearbeitet; diese Methode ist bevorzugt und erlaubt technisch vorteilhaft die Gewinnung praktisch schwermetallfreier-bzw. -armer Pfropfpolymerisate, da sich bekanntermaßen derartige Metallspuren nachteilig auf anwendungstechnische Eigenschaften von Kunststoffen auswirken können. Das Verfahren arbeitet mit wäßrigen Lösung von Ascorbinsäure und wäßrigen Lösungen von Hydroperoxid; vorteilhaft ist es, nicht genügend wasserlösliche Hydroperoxide, wie Cumolhydroperoxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. In einer bevorzugten Variante wird das Hydroperoxid anteilmäßg mit dem zu bepfropfenden Kautschuk in den Reaktoren vorgelegt; die Pfropfmono meren sowie die restliche Ascorbinsäure, Hydroperoxid und gegebenenfalls Emulgator werden mit fortschreitender Polymerisation der Pfropfmonomeren separat in den Reaktor eingespeist.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausgeute geht zurück; das Molekulargewicht der gepfropften und des freien Harzes wird geringer; Unter-oder Überschreitung der Mengen an Hydroperoxid und Ascorbinsäure kann sich außerdem empfindlich auf Monomerumsatz und Emulsionsstabilität auswirken, so daß die technische Realisierung der Pfropfpolymerisation unmöglich wird.

Für eine optimale Durchführung des Verfahrens und eine optimale Struktur der Pfropfpolymerisate und deren physikalische Eigenschaften ist es empfehlenswert, bei der Pfropfpolymerisation eine Temperatur von 40 bis 70°C einzuhalten und die oben angegebenen Hydroperoxid/Ascorbinsäuremengen zu verwenden.

Bei der Pfropfpolymerisation bis zu Monomerumsätzen von größer 90 Gew.-%, insbesondere größer 98

3

Gew.-%, fallen lagerstabile Pfropfpolymeremulsionen mit Polymerisatgehalten von 25 bis 50 Gew.-% an: das Pfropfpolymerisat selbst läßt sich gut aus den Emulsionen durch gekannte Koagulations-Verfahren (z.B. mittels Säuren oder Salzen) isolieren. Will man die Pfropfpolymerisate mit thermoplastischen Harzen kombinieren, die selbst als Emulsion vorliegen, so kann man die Pfropfpolymerisat emulsion mit der Harzemulsion mischen und gemeinsam koagulieren.

Die erfindungsgemäßen Pfropfpolymerisate zeichnen sich durch besondere thermoplastisch elastische Eigenschaften aus, die sich beispielsweise im Spannungsdehnungsverhalten und im Modul zeigen; sie können daher vorteilhaft verwendet werden, wenn kautschukartiges Verhalten in Kombination mit bestimmter Steifigkeit gefordert wird, also zur Herstellung von Gummiartikeln, die nicht vulkanisiert werden müssen.

Andererseits stellen sie wertvolle Komponenten für thermoplastische Formmassen dar, z.B. zur Herstellung hochkerbschlagzäher Formkörper mit außergewöhnlichen Eigenschaftskombinationen z.B. von Wärmestandfestigkeit und Kerbschlagzähigkeit bzw. Modulverhalten und Kerbschlagzähigkeit. Insbesondere eignen sie sich zur Mischung mit PVC; die resultierenden Formmassen können durch Extrusion oder Spritzguß zu Formkörpern verarbeitet werden, insbesondere zu Rohren, Platten, Großbehältern oder Tiefziehfolien.

## Beispiele

### 1) Eingesetzte Polymerisate

1.1) Polyvinylchlorid (PVC) mit einem K-Wert von 70

1.2) AMS-Harz: Copolymerisat aus 69 Gew.-% α-Methylstyrol und 31 Gew.-% Acrylnitril, hergestellt durch radikalische Emulsionspolymerisation. Das Copolymerisat besitzt einen Staudinger-Index $[\eta]$ von 0,6 dl/g, gemessen in DMF bei 23°C.

1.3) Emulion eines partiell vernetzten, grobteiligen Polybutadiens mit einer mittleren Teilchendurchmesser von 0,38 μm ($d_{50}$-Wert), einen Gelgehalt von 89 Gew.-%. Die Emulsion enthält 50 Gew.-% Polymerisatfeststoff.

### 2) Pfropfpolymerisate

### 2.1) Pfropfpolymerisate zum Vergleich

### 2.1.1.) Pfropfpolymerisat aus 75 Gew.-% Dienkautschuk und 25 Gew.-% SAN-Copolymer

In einem Reaktor werden vorgelegt:
4.560 Gew.-Teile der Emulsion 1.3) und 2.250 Gew.-Teile Wasser. Nach Aufheizen auf 65°C wird eine Starterlösung aus 5 Gew.-Teilen Kaliumperoxidisulfat in 150 Gew.-Teilen Wasser einge speist. Anschließend werden folgende zwei Lösungen innerhalb von 4 Stunden bei 65°C in den Reaktor unter Rühren eindosiert.

1. Styrol 558 Gew.-Teile
Acrylnitril 217 Gew.-Teile
2. Wasser 1.250 Gew.-Teile
Na-Salz der disproportionierten-Abietinsäure 25 Gew.-Teile
1n-Natronlauge 20 Gew.-Teile

Anschließend wird durch Nachrühren bei 65°C innerhalb von 4 Stunden auspolymerisiert. Der Monomerumsatz ist größer als 98 Gew.-%. Nach Stabilisierung mit 1,2 Gew.-Teilen phenolischem Antioxidanz, pro 100 Gew.-Teile Pfropfpolymer, wird das Pfropfpolymer durch Koagulation mit einer Essigsäure/Mg-Sulfat-Mischung isoliert, gewaschen und zu einem Pulver getrocknet.

### 2.1.2) Pfropfpolymerisat aus 50 Gew.-% Dienkautschuk und 50 Gew.-% SAN-Copolymer

In einem Reaktor werden vorgelegt:
1.500 GEw.-Teile der Emulsion 1.3) und 1.030 Gew.-Teile Wasser. Nach Aufheizen auf 65°C wird eine Starterlösung aus 3 Gew.-Teilen Kaliumperoxidisulfat in 50 Gew.-Teilen Wasser eingespeist. Anschließend werden folgende zwei Lösungen innerhalb von 6 Stunden bei 65°C in den Reaktor eingespeist:

1. Styrol 540 Gew.-Teile
Acrylnitril 210 Gew.-Teile
2. Wasser 1.000 Gew.-Teile
Na-Salz der disproportionierten-Abietinsäure 13 Gew.-Teile
1n-Natronlauge 10 Gew.-Teile

Im Anschluß daran wird durch Nachrühren bei 65°C innerhalb von 4 Stunden auspolymerisiert. Der Monomerumsatz ist größer als 98 Gew.-%. Die Stabilisierung und Isolierung des Pfropfpolymerisats erfolgt analog Vorschrift 2.1.1). Die SAN-Pfropfung verlief mit einer Pfropfausbeute von 55 Gew.-%.

#### 2.2) Pfropfpolymerisat (erfindungsgemäß) aus 50 Gew.-% Dienkautschuk und 50 Gew.-% SAN-Copolymer

Eine Mischung aus 200 Gew.-Teilen des Latex 1.3) und 149 Gew.-Teilen Wasser werden in einem Reaktor vorgelegt und auf 60 bis 62°C aufgeheizt. Bei dieser Temperatur werden folgende zwei Lösungen bzw. Emulsionen in nachfolgender Reihenfolge in den Reaktor eingegeben:

a) 0,0836 Gew.-Teile Cumolhydroperoxid
6,9600 Gew.-Teile Wasser
0,0600 Gew.-Teile Na-Salz von $C_{14}$-$C_{16}$-Alkylsulfonsäuren
b) 0,0557 Gew.-Teile Ascorbinsäure
6,9600 Gew.-Teile Wasser

Danach werden nachstehende Zuläufe innerhalb von 4 Stunden bei einer Innentemperatur von 60 bis 62°C in den Reaktor unter Rühren eindosiert:

Z1) 39,05 Gew.-Teile Wasser
4,00 Gew.-Teile Na-Salz disproportionierter Abietinsäure
3,10 Gew.-Teile 1n-Natronlauge
0,62 Gew.-Teile Cumolhydroperoxid
Z2) 72 Gew.-Teile Styrol
28 Gew.-Teile Acrylnitril
Z3) 39,8 Gew.-Teile Wasser
0,105 Gew.-Teile Ascorbinsäure.

Anschließend wird bei 60 bis 62° C 6 Stunden lang auspolymerisiert. Der Monomerumsatz ist größer als 97 Gew.-%. Die Stabilisierung und Isolierung des Pfropfpolymerisats erfolgt analog der Vorschrift 2.1.1). Die SAN-Pfropfung verlief mit einer Pfropfausbeute von 89 Gew.-%.

#### 3) Eigenschaften der Formmassen

Zur Herstellung von Formmassen werden die in nachstehender Tabelle 1) aufgeführten Komponenten in den angegebenen Mengen vermischt; als Stabilisator-und Gleitmittelzusatz werden 2 Gew.-% Ba/Cd-Laurat (fest), 0,3 Gew.-% sterisch gehindertes phenolisches Antioxidanz (fest) und 0,2 Gew.-% Esterwachs zugesetzt. Die Formmassen werden auf einem Mischwalzwerk (bei 180° C) homogenisiert und bei 190° C zu Prüfkörpern verarbeitet.

Tabelle 1

Formmassen Übersicht der Zusammensetzung

| Formmassen- bezeichnung | Zusammensetzung (in Gew.-Teilen) | | | | | |
|---|---|---|---|---|---|---|
| | 1.1 | 1.2 | 2.1.1 | 2.1.2 | 2.2 | |
| 3.1 | 55 | 34,65 | | | 10,35 | |
| 3.2 | 55 | 34,65 | | 10,35 | | |
| 3.3* | | 71 | | 29 | | |
| 3.4* | | 71 | | | 29 | |
| 3.5 | 93 | | 7 | | | |
| 3.6 | 93 | | | 7 | | |
| 3.7 | 93 | | | | 7 | |
| 3.8 | 85 | | 15 | | | |
| 3.9 | 85 | | | 15 | | |
| 3.10 | 85 | | | | 15 | |

* Die Formmassen 3.3 und 3.4 enthalten als Additive nur 2 Gew.-% Esterwachs

## Tabelle 2

### Eigenschaften der Formmassen

| Bezeichnung | Kerbschlagzähigkeit (kJ/m²) 20° C | 0° C | Wärmeformbeständigkeit Vicat B (°C) | E-Modul (Biege) (M Pa) | |
|---|---|---|---|---|---|
| 3.1 | 24,4 | 11,3 | 95 | | |
| 3.2 | 10,0 | 8,0 | 94 | | Vergleichsversuch |
| 3.3 | 8,5 | | 113 | 2.450 | Vergleichsversuch |
| 3.4 | 14 | | 113 | 2.020 | |
| 3.5 | 9,2 | 7,5 | | | Vergleichsversuch |
| 3.6 | 6,7 | 5,4 | | | Vergleichsversuch |
| 3.7 | 11,8 | 8,0 | | | |
| 3.8 | 40,5 | 30 | | | Vergleichsversuch |
| 3.9 | 25,0 | 12,6 | | | |
| 3.10 | 55,4 | 39 | | | |

0 282 854

Der Vergleich von Formmassen 3.1 und 3.2 zeigt die vorteilhaften Kerbschlagzähigkeiten bei Einsatz der erfindungsgemäßen Pfropfpolymerisate; dies ist überraschend, da die Wärmeformbeständigkeit keine Einbußen erleidet.

Der Vergleich der Formmassen 3.3 und 3.4 zeigt, daß Formmasse 3.4 bei konstanter Wärmeformbeständigkeit und erhöhter Kerbschlagzähigkeit eine besonders günstige Flexibilität aufweist, so daß sich solche Formmassen insbesondere zur Herstellung von thermoplastischen Formkörpern höherer Flexibilität und Weichheit eignen.

Der Vergleich der Formmassen 3.5 bis 3.10 zeigt, daß die erfindungsgemäßen Pfropfpolymerisate überlegene Zähigkeit besitzen, die sogar von bekannten Pfropfpolymerisaten mit besonders hohem Kautschukgehalt (75 Gew.-%) nicht erreicht werden.

Die Kerbschlagzähigkeit wurde ermittelt nach DIN 53 453, der E-Modul nach DIN 53 457, die Wärmeformbeständigkeit nach DIN 53 460.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (siehe R. Kuhn, Makromol-Chemie 177, 1525 (1976)).

## Ansprüche

1. Verfahren zur Herstellung von Pfropfpolymerisaten, aus

a) 40 bis 90 Gew.-% eines wenigstens partiell vernetzten, teilchenförmigen Dienkautschuks einer mittleren Teilchendurchmessers von 0,1 bis 0,6 μm und

b) 60 bis 10 Gew.-% Styrol, Acrylnitril, Methylmethacrylat, oder Mischungen daraus durch Emulsions-Pfropfpolymerisation,

dadurch gekennzeichnet, daß man Initiatorsysteme aus einem organischen Hydroperoxid und Ascorbinsäure unter Erzielung einer Pfropfausbeute von größer 60 Gew.-% verwendet.

2. Verfahren nach Anspruch 1, gekennzeichnet, daß die Pfropfpolymerisation der Monomeren b) in wäßriger Emulsion in Gegenwart einer Emulsion des Dienkautschuks a) bei Temperaturen von 40 bis 70°C unter Einsatz eines Initiatorsystems aus organischem Hydroperoxid (I) und Ascorbinsäure (II) ausgeführt wird, wobei 0,3 bis 1,5 Gew.-Teile (I) und 0,1 bis 1 Gewichtsteile (II), jeweils bezogen auf 100 Gew.-Teile Monomer b) eingesetzt werden und das Gewichtsverhältnis (I)/(II) 0,3 bis 15 ist.

3. Propfpolymerisate, erhalten nach dem Verfahren gemäß Anspruch 1.

4. Verwendung der gemäß Anspruch 1 hergestellten Pfropfpolymerisate zur Herstellung von thermoplastischen Formmassen durch Vermischen mit einem thermoplastischen Harz.

5. Verwendung nach Anspruch 4, worin das thermoplastische Harz ein Copolymerisat von Styrol und Acrylnitril, α-Methylstyrol und Acrylnitril, Polyvinylidenchlorid oder ABS-Kunststoff ist.